# EUROPÄISCHE PATENTSCHRIFT

(11) **EP 2 745 727 B1**
(45) Veröffentlichungstag und Bekanntmachung des Hinweises auf die Patenterteilung: **05.02.2020**
(21) Anmeldenummer: 13197912.2
(22) Anmeldetag: 18.12.2013
(51) Int. Cl.: A45C 5/14, B60B 33/04

(54) **Rolle und auf Rollen verfahrbarer Koffer**
Roller and suitcase movable on rollers
Roulette et valise déplaçable sur roulettes

(30) Priorität: 21.12.2012 DE 202012105026 U; 21.01.2013 DE 202013100277 U
(43) Veröffentlichungstag der Anmeldung: 25.06.2014
(73) Patentinhaber: Wriedt Vermögensverwaltung GmbH & Co. KG, 48477 Hörstel-Bevergern (DE)
(72) Erfinder: Wriedt, Karl-Heinz, 48431 Rheine (DE)
(74) Vertreter: Müller, Enno

(56) Entgegenhaltungen:
- EP-A1- 0 214 387
- EP-A1- 1 332 693
- WO-A1-2010/003185
- CN-U- 201 563 809
- CN-U- 202 552 527
- DE-A1- 10 208 000
- GB-A- 861 382
- US-A- 4 485 521
- US-B1- 6 325 189

## Beschreibung

Die Erfindung betrifft einen auf Rollen verfahrbaren Koffer nach den Merkmalen des Oberbegriffs des Anspruches 1.

Es ist bekannt, behelfsweise, einen Koffer, insbesondere nicht mehr schließenden Koffer, mit einem Gurt zu umschlingen und diesen zum Zusammenhalt der Schalenteile zu verwenden. Aus der CN 201563809 U ist ein Koffer bekannt, der umschlingende Gurte aufweist, wobei die Gurte mit krampenartigen Übergreifteilen an einer Kofferwandung befestigt sind. Bei einem aus der US 6 325 189 B1 bekannten Koffer sind zwei querverlaufende Gurte vorgesehen, die zufolge einer Weichausbildung eines Kofferoberteils bei beladenem Koffer Einsenkungen in dem Kofferoberteil in Längsrichtung der Gurte hervorrufen. Weiter ist ein Koffer mit einem quer zu einer Trennungsebene von Schalenteilen verlaufenden Gurt aus der DE 102 08 000 A1 bekannt.

Ausgehend von dem dargelegten Stand der Technik beschäftigt sich die Erfindung mit der Aufgabe, einen Koffer mit einem Umschlingungsgurt anzugeben, der günstig ausgebildet ist.

Diese Aufgabe ist beim Gegenstand des Anspruches 1 gelöst, wobei darauf abgestellt ist, dass zwei, im Wesentlichen parallel und beabstandet zueinander verlaufende, die Schalenteile umschlingende Gurte vorgesehen sind, die zumindest teilweise in kofferfesten Seitenführungen einliegen, dass die Gurte auf einem Teil ihrer Länge in nur durch Zerstörung aufhebbarer Weise mit den Schalenteilen verbunden sind, und dass eine Seitenführung durch eine Formgebung des Schalenteils erreicht ist.

Der mit Gurten versehene Koffer weist zwei jeweils einem vorgegebenen Ort, vermittels der Seitenführung, zugeordnete Gurte auf, die auch ständig am Koffer befestigt sind. Sie können von dem Nutzer wahlweise zur ergänzenden Verschließung des Koffers, der bevorzugt hinsichtlich der Schalenteile einen üblichen Verschluss, insbesondere Reißverschluss, aufweist, genutzt werden.

Hinsichtlich der grundsätzlich wie beschrieben vorgesehenen beabstandeten Anordnung der Gurte ist dies bevorzugt in einer Richtung quer zur Umschlingungsrichtung der Gurte um den Koffer. Die Umschlingungsrichtung als solche ist weiter bevorzugt quer zu einer Öffnungsebene zwischen den Schalenteilen.

Die Beabstandung kann insbesondere um ein solches Maß gegebenen sein, wie es der Erstreckung eines Griffes, auf einer oberen Schmalseite des Koffers, in dieser Richtung entspricht. Dies jedenfalls bezogen auf einen frei gespannten Teil des Griffes.

Eine Schnalle, die bevorzugt an beiden Gurten vorgesehen ist, ist weiter bevorzugt zugeordnet an einem Boden des Schalenteiles angeordnet. Sie ist entsprechend bevorzugt nicht auf der oberen Schmalseite (bei üblichem Gebrauch) des Koffers vorgesehen, auf welcher jedoch andererseits bevorzugt der Griff ausgebildet ist.

Der Griff kann an seinen Endbereichen Griffhalterungen aufweisen. Eine Griffhalterung kann von einem Gurt durchsetzt sein. Somit kann auch sogleich eine Befestigung des Gurtes an der oberen Schmalseite des Koffers hierdurch erreicht sein.

Die Seitenführung kann aus der Wandung des Schalenteils in Gestalt etwa einer Rippe oder Sicke geformt sein. Dies dann bevorzugt, ohne dass im Bereich dieser Seitenführung eine wesentlich andere Wandstärke eines Schalenteils als im nicht beeinflussten Bereich vorgesehen ist.

Der Koffer kann auch einen einem Boden eines Schalenteils zugeordneten Ausziehgriff aufweisen, wie er bekannt ist, um einen Koffer über Rollen als Trolley zu ziehen. Hierbei können die Gurte bezogen auf eine Ausziehrichtung des Ausziehgriffes beidseitig des Ausziehgriffes angeordnet sein.

Die Kofferrolle kann in weiterer Einzelheit ein Rad, eine Gabel, in der das Rad um eine bei üblicher Nutzung gegebene Horizontalachse drehbar aufgenommen ist, eine Halteplatte und bevorzugt ein Drehlager aufweisen, mit welchem Drehlager die Gabel um eine bei üblicher Nutzung gegebene Vertikalachse drehbar vorgesehen sein kann, wobei weiter die Gabel, gegebenenfalls relativ zu dem Drehlager, um eine bei üblicher Nutzung horizontal verlaufende Schwenkachse gegen einen Dämpfungswiderstand verschwenkbar ist.

Die Kofferrolle kann auch in weiterer Einzelheit ein Rad, eine Gabel, in der das Rad um eine bei üblicher Nutzung gegebene Horizontalachse drehbar aufgenommen ist, und eine Halteplatte aufweisen, wobei weiter die Gabel relativ zu der Halteplatte um eine bei üblicher Nutzung horizontal verlaufende Schwenkachse gegen einen Widerstand eines Dämpfungselementes verschwenkbar ist und das Rad eine in einer Richtung der Schwenkachse gesehen gegebene Radkontur aufweist, wobei die Gabel mit einem, gesehen von der Schwenkachse, über die Radkontur vorspringenden und ebenfalls um die Horizontale verschwenkenden Eingreiffortsatz mit dem Dämpfungselement zusammenwirkt.

Die Maßnahme, die Gabel relativ zu dem Drehlager verschwenkbar vorzusehen, ermöglicht es, in diese Verschwenkbarkeit eine Dämpfung zu integrieren und so wirksam einen Geräuschschutz zu erreichen. Der Geräuschschutz wird erreicht, ohne dass hinsichtlich der üblichen Bewegbarkeit des Rades bzw. der Rolle ein Nachteil in Kauf zu nehmen ist. Die Schwenkachse kann grundsätzlich oberhalb des Drehlagers angeordnet sein. Bevorzugt ist sie jedoch unterhalb des Drehlagers angeordnet.

Bei der Ausgestaltung der Gabel mit einem um die Horizontalachse verschwenkenden Eingreiffortsatz ist der Eingreiffortsatz günstig zur Zusammenwirkung auf dem Dämpfungselement genutzt. Er kann eine günstig ineinander geschachtelte Bauweise erreicht werden.

Hinsichtlich der Rolle, deren Gabel verschwenkbar ist, ist bevorzugt, dass jedenfalls einseitig, weiter bevorzugt beidseitig der Schwenkachse ein Dämpfungselement angeordnet ist. Das Dämpfungselement kann in Form einer Feder bspw. einer Wendelfeder, gestaltet sein. Vorzugsweise ist es durch ein elastisches Gummi oder Kunststoffmaterial, letzteres bspw. in Form eines thermoplastischen Elastomers, gebildet. Das Dämpfungselement kann insbesondere bei Bildung durch ein solches elastisches Material säulenartig, etwa zylinderförmig, gebildet sein. Dies mit einem bevorzugt geschlossenen Querschnitt. Gegebenenfalls aber auch mit einem rohrförmigen Querschnitt.

Bei säulenartiger, zylindrischer und/oder rohrartiger Gestaltung, aber auch im Hinblick auf eine zentrale Achse einer Wendelfeder ist bevorzugt, dass das Dämpfungselement in Richtung der Säulenlängsachse oder der Zylinderachse oder eben der Mittelachse der Feder komprimierbar gebildet ist. Es ist eben entsprechend auch bevorzugt, dass die Feder so angeordnet ist, dass sie in dieser Richtung bei Beanspruchung komprimiert wird.

In weiterer Einzelheit kann das Drehlager eine untere und eine obere Drehlagerplatte aufweisen. Ein Dämpfungselement kann einerseits an der Unterseite der unteren Drehlagerplatte und an der Oberseite der Gabel abgestützt angeordnet sein.

Wenn das Dämpfungselement auch in einer ersten Ausführungsform bevorzugt in gerader Richtung sich erstreckend angeordnet ist, ist es bezüglich einer weiteren Ausführungsform bevorzugt in einer in einem Kreisbogen um die Horizontalachse, um welche die Gabel schwenkt, angepassten Führung in der Halteplatte aufgenommen. Die Halteplatte kann hierzu auch geeignet kreisbogenabschnittsförmig verlaufen oder ein Teil aufweisen, das eine entsprechende kreisbogenabschnittsförmige Führung ausbildet. Insbesondere kann die Halteplatte insbesondere in diesem Zusammenhang auch gabelartig gebildet sein. Zudem kann das Rad der Rolle auch einen Luftreifen aufweisen. Insbesondere einen schlauchlosen Luftreifen. Es kann sich um ein Gummi-, TPE- oder TPU-Teil handeln. Im Inneren des Reifens kann ein kreisringförmig umlaufender Luftraum ausgebildet sein. Hierdurch kann kombinativ die Geräuschminderung weiter verbessert werden.

Hinsichtlich des Koffers insgesamt kann auch vorgesehen sein, dass dieser mit einem Kompass versehen ist. Bevorzugt ist der Kompass auf einer bei üblichem Gebrauch oberen Seite des Koffers angeordnet.

Nachstehend ist die Erfindung des Weiteren anhand der beigefügten Zeichnung, die jedoch lediglich Ausführungsbeispiele darstellt, erläutert. Hierbei zeigt:
- Fig. 1: eine Rolle erster Ausführungsform in einer Ansicht perspektivisch von oben;
- Fig. 2: eine Seitenansicht der Rolle gemäß Fig. 1;
- Fig. 3: eine Draufsicht auf die Rolle gemäß Fig. 1;
- Fig. 4: einen Querschnitt durch die Rolle, geschnitten in der Ebene IV-IV in Fig. 3;
- Fig. 5: eine Explosionsdarstellung der Rolle gemäß Fig. 1;
- Fig. 6: eine perspektivische Ansicht von schräg oben einer Rolle zweiter Ausführungsform;
- Fig. 7: eine Seitenansicht der Rolle gemäß Fig. 6;
- Fig. 8: eine Vorderansicht der Rolle gemäß Fig. 6;
- Fig. 9: einen Querschnitt durch die Rolle gemäß Fig. 6, geschnitten in der Ebene IX-IX in Fig. 8;
- Fig. 10: eine Explosionsdarstellung der Rolle gemäß Fig. 6;
- Fig. 11: eine perspektivische Ansicht von schräg oben eines Koffers erster Ausführungsform;
- Fig. 12: eine Seitenansicht des Koffers gemäß Fig. 11;
- Fig. 13: eine weitere Seitenansicht des Koffers gemäß Fig. 11;
- Fig. 14: eine Schmalseitenansicht des Koffers gemäß Fig. 11;
- Fig. 15: eine weitere Schmalseitenansicht des Koffers gemäß Fig. 11;
- Fig. 16: eine Draufsicht auf den Koffer gemäß Fig. 11;
- Fig. 17: eine Unteransicht des Koffers gemäß Fig. 11;
- Fig. 18: eine perspektivische Ansicht von schräg oben eines Koffers zweiter Ausführungsform;
- Fig. 19: eine Vorderansicht des Koffers gemäß Fig. 18;
- Fig. 20: eine Rückansicht des Koffers gemäß Fig. 18;
- Fig. 21: eine Seitenansicht des Koffers gemäß Fig. 18;
- Fig. 22: eine weitere Seitenansicht des Koffers gemäß Fig. 18;
- Fig. 23: eine Unteransicht des Koffers gemäß Fig. 18; und
- Fig. 24: eine Draufsicht auf den Koffer gemäß Fig. 18.

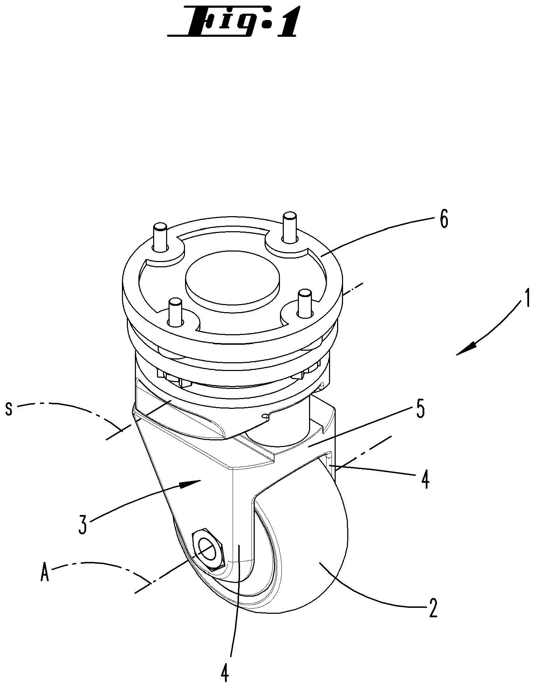

Dargestellt und beschrieben ist, zunächst mit Bezug zu den Figuren 1 bis 5 eine Rolle 1 mit einem Rad 2 und einer Gabel 3. Die Gabel 3 weist zwei Gabelschenkel 4 auf und einen die Gabelschenkel 4 verbindenden Gabelsteg 5.

Das Rad 2 ist bei üblicher Nutzung der Rolle 1 um eine Horizontalachse A drehbar.

Das Rad ist nicht angetrieben. Es wird lediglich durch einen den Koffer bewegenden Nutzer gerollt.

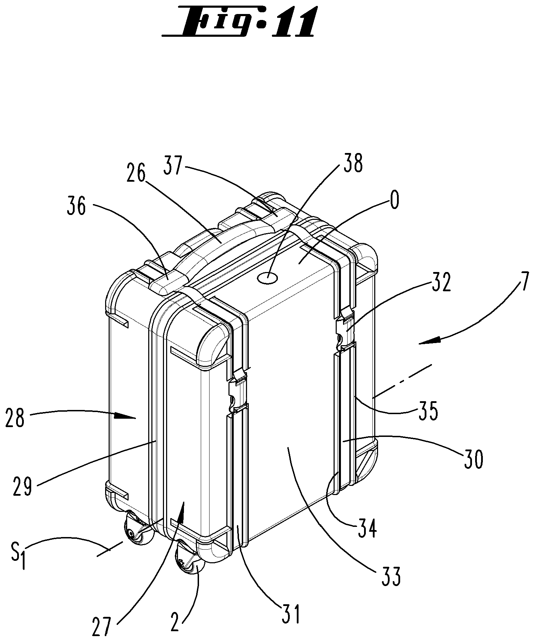

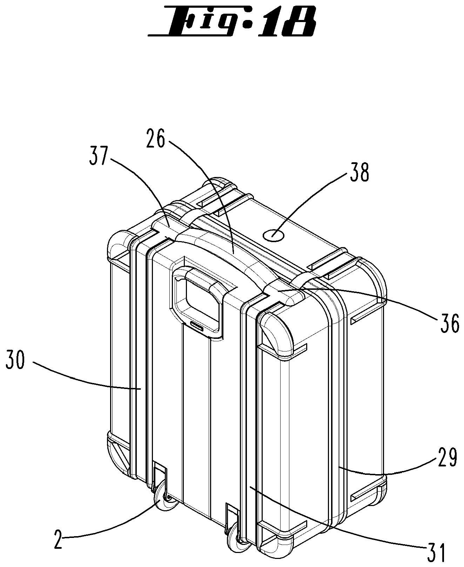

Die Rolle 1 weist weiter eine Halteplatte 6 auf, mit welcher die Rolle 1 an einem Gegenstand insbesondere einem Koffer 7, vergleiche etwa Fig. 11 und 18, befestigbar ist.

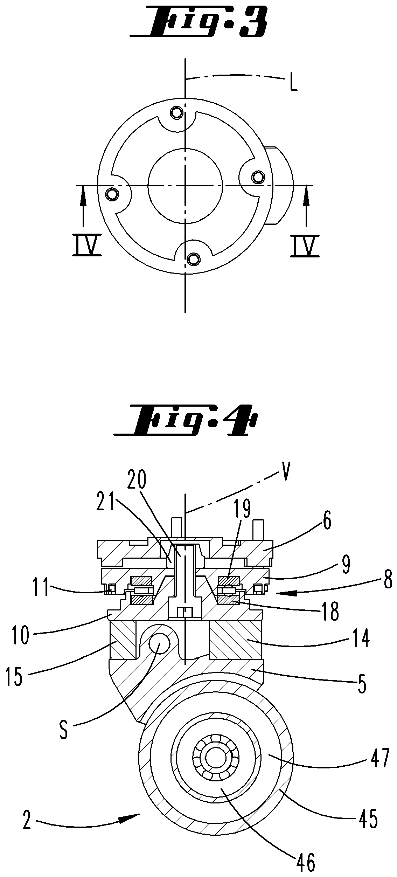

Unterhalb der Halteplatte 6, wie insbesondere aus der Schnittdarstellung gemäß Fig. 4 ersichtlich ist, ein Drehlager 8 angeordnet. Das Drehlager 8 besteht aus einer oberen Drehlagerplatte 9 und einer weiteren, unteren, Drehlagerplatte 10, zwischen welchen Drehlagerplatten 9, 10 Wälzkörper 11, bevorzugt für sich aufgenommen in einem Käfig, angeordnet sind.

Die Gabel 3 ist mittels des Drehlagers 8 um eine bei üblicher Nutzung vertikal verlaufende Achse V, eine Vertikalachse, drehbar.

Weiter ist die Gabel 3 relativ zu der Halteplatte 6 verschwenkbar um eine Schwenkachse S.

Das Rad 2 weist bevorzugt einen Luftreifen 45 auf. Der Luftreifen 45 ist weiter bevorzugt auf einer Felge 46 aufsitzend angeordnet. Innerhalb der Felge 46 ist weiter bevorzugt ein Kugellager angeordnet, das von einer Achse durchsetzt ist. Es kann sich hinsichtlich des Luftreifens 45 um ein elastisches Teil, bspw. bestehend aus Gummi, TPU oder TPE, handeln. Der Luftreifen weist bevorzugt eine kreisringförmig umlaufende Luftkammer 47 auf.

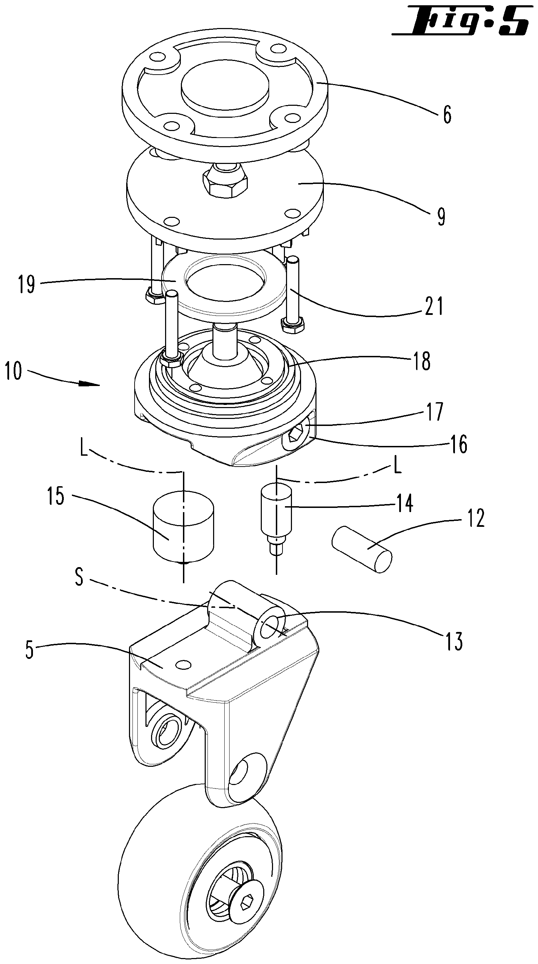

Die Schwenkachse S ist körperlich durch ein Achsenteil 12 gegeben, vgl. Fig. 5, das im Einzelnen bevorzugt in einem Lagerauge 13 der Gabel einerseits und Befestigungsöffnungen 16 der unteren Drehlagerplatte andererseits aufgenommen ist. Die Schwenkachse S bzw. konkret auch beim Ausführungsbeispiel das Achsenteil 12 ist an dem bei üblicher Nutzung der Rolle 1 horizontal verlaufenden Gabelsteg 5 angebracht. Weiter bevorzugt an einer Oberseite des Gabelsteges 5.

Der Gabelsteg 5 verläuft auch, wie etwa auch aus Fig. 1 bereits ersichtlich, oberhalb des Rades 2, dieses in Richtung der Horizontalachse A überbrückend.

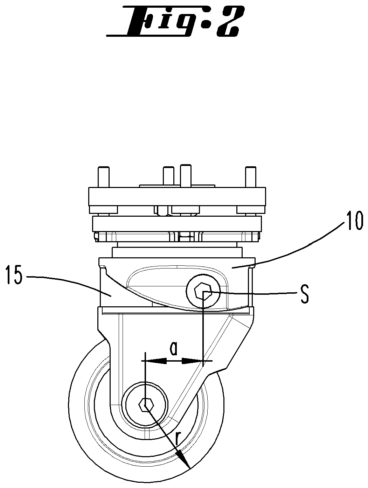

Die Schwenkachse S ist weiter im Hinblick auf eine übliche Ausrichtung der Rolle, wie etwa aus Fig. 2 ersichtlich, horizontal um ein Versetzmaß a versetzt verlaufend zu der Horizontalachse A. Das Versetztmaß a entspricht bevorzugt einer Hälfte bis zu dem Dreifachen eines Radius r des Rades 2.

Die Gabel 3 ist weiter über jedenfalls ein, beim Ausführungsbeispiel bevorzugt zwei Dämpfungselemente 14, 15 gegenüber der Halteplatte, beim Ausführungsbeispiel der Figuren 1 bis 5 konkret gegenüber der unteren Drehlagerplatte 10 abgestützt. Hierdurch können wirkungsvoll Geräusche beim Rollen des Rades gedämpft werden.

Jedes der Dämpfungselemente 14, 15 im Ausführungsbeispiel 1 ist auf einer Seite der Schwenkachse S angebracht, so dass die Dämpfungselemente 14, 15 bezüglich der Schwenkachse S gegenüberliegend angeordnet sind.

Wie sich in weiterer Einzelheit etwa auch aus Fig. 5 ergibt, ist ein Dämpfungselement 14 bzw. 15 zylinderförmig, als Massivteil, gestaltet. Es kann bspw. aus Gummi oder einem thermoplastischen Elastomer bestehen.

Ein Dämpfungselement 14, 15 wird in Richtung seiner Längsachse L beansprucht.

In weiterer Einzelheit ist an der unteren Drehlagerplatte 10 eine in Richtung der Schwenkachse S verlaufende Befestigungsöffnung 16 mit einem Befestigungselement 17 für das Achsenteil 12 vorgesehen.

Oberseitig an der unteren Drehlagerplatte 10 ist, wie sich auch aus der Querschnittsdarstellung der Fig. 4 in weiterer Einzelheit ergibt, ein Laufbahnkörper 18 vorgesehen, der bspw. umspritzt sein kann. Somit kann der Laufbahnkörper 18 aus einem härteren Material, insbesondere aus einem Stahlteil gebildet sein. In gleicher Weise ist in der oberen Drehlagerplatte 9 ein weiteres Laufbahnteil 19 gegenüberliegend zu dem Laufbahnteil 18 angeordnet.

Die untere Drehlagerplatte 10 ist mittels einer beim Ausführungsbeispiel und bevorzugt zentral angeordneten Schraube 20 mit der oberen Drehlagerplatte 9 verbunden. Aufsitzend auf der oberen Drehlagerplatte 9 ist eine Mutter 21 mit der Schraube 20 verbunden.

Die Halteplatte 6 ist, vgl. auch Fig. 5, mit der oberen Drehlagerplatte 9 verbunden. Befestigungsschrauben 21 durchsetzen die obere Drehlagerplatte 9 und die Halteplatte 6 zur letztlichen Befestigung an einem Gegenstand wie eben einem Koffer 7.

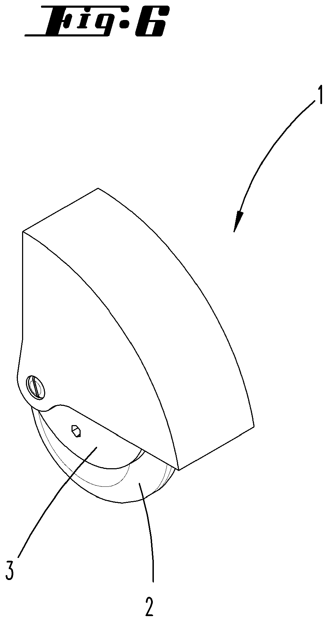

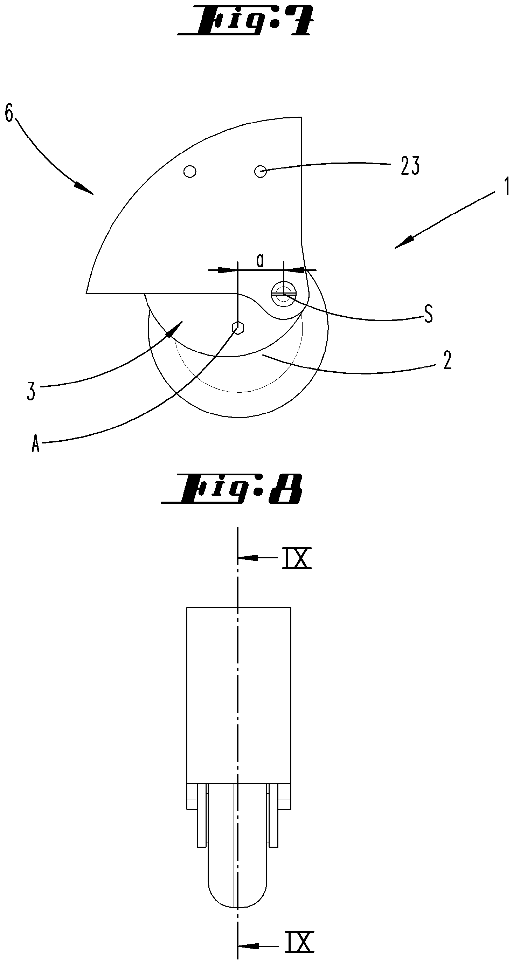

Bei der Ausführungsform der Figuren 6 bis 10 der Rolle 1 sind gleiche Teile mit denselben Bezugszeichen versehen.

Das Rad 2 der Rolle 1 gemäß Fig. 6 ist in einer Gabel 3 gelagert, deren Gabelsteg 5 sich in einen über die Radkontur K, gesehen von der Schwenkachse S, vorspringenden und ebenfalls um die Schwenkachse verschwenkenden Eingreiffortsatz 22 fortsetzt. Der Eingreiffortsatz 22 wirkt mit einem Dämpfungselement 14 zusammen. Das Dämpfungselement 14 ist bei der Ausführungsform der Rolle gemäß Fig. 6 bevorzugt als Wendelfeder ausgebildet. Zudem ist das Dämpfungselement 14 bei dieser Ausführungsform bevorzugt kreisbogenabschnittsförmig verlaufend angeordnet.

Die Gabel 3 dieser Rolle gemäß Fig. 6 ist ihrerseits in einer gabelartig gebildeten Halteplatte 6 aufgenommen. Eine Seitenfläche der Halteplatte 6, entsprechend einem Gabelarm, bezogen auf die gabelartige Gestalt, kann, bspw. mittels Befestigungsöffnungen oder Befestigungselementen 23 an einem Gegenstand wie einem Koffer 7 befestigt werden.

Auch bei der Ausführungsform der Rolle gemäß Fig. 6 ist die Horizontalachse A um ein Versetztmaß a gegenüber der Schwenkachse S versetzt. Das Versetztmaß a kann hier in gleicher Größenordnung gegeben sein wie bei der Ausführungsform der Rolle gemäß Fig. 1.

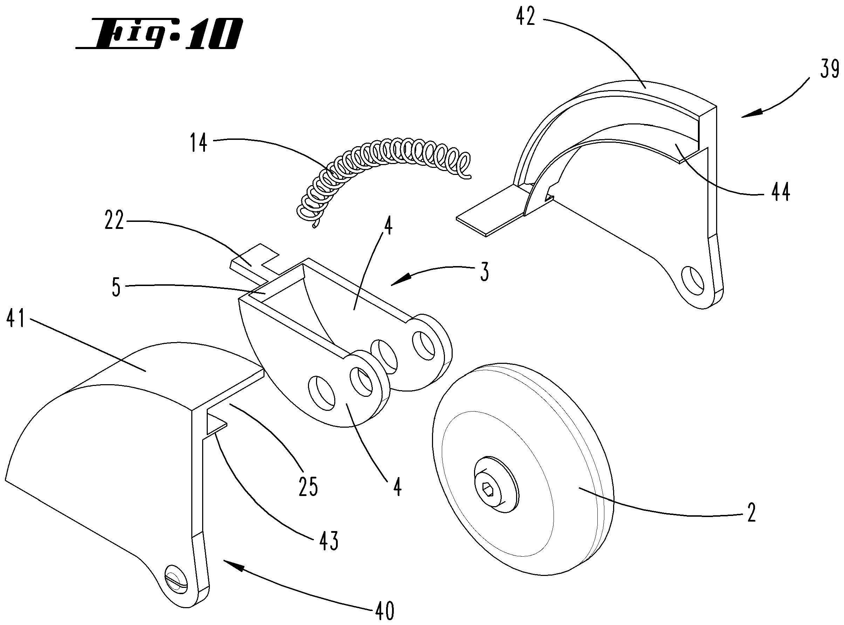

Das Dämpfungselement 14 ist weiter bevorzugt in einem kammerartigen Raum 24 aufgenommen, der lediglich durch einen Durchgriffsspalt 25 einen Durchgriff des Eingreiffortsatzes 22 ermöglicht. Der Eingreiffortsatz 22 ist, wie etwa auch aus Fig. 10 ersichtlich, jenseits des Durchgriffsspaltes 25 vergrößert, hier hakenförmig abgewinkelt, gebildet.

Der Durchgriffsspalt 25 ist zwischen den jeweils ein Teil-Schalenteil bildenden Schenkelteile 39, 40 der gabelartigen Halteplatte der Rolle gemäß Fig. 6 ausgebildet. In weiterer Einzelheit weist das Schalenteil 40 einen oberen Abschlusssteg 41 auf, der mit einem in der Breite kürzeren Abschlussgegensteg 42 des anderen Schalenteils 39 im zusammengesetzten Zustand einen Abschluss bildet. Darunter, radial versetzt, ist an beiden Schalenteilen 39, 40 ein Untersteg 43, 44 ausgebildet. Zwischen den Unterstegen 43, 44, die entsprechend nicht im zusammengesetzten Zustand aneinander stoßen, ist im montierten Zustand der Durchgriffsspalt 25 gegeben.

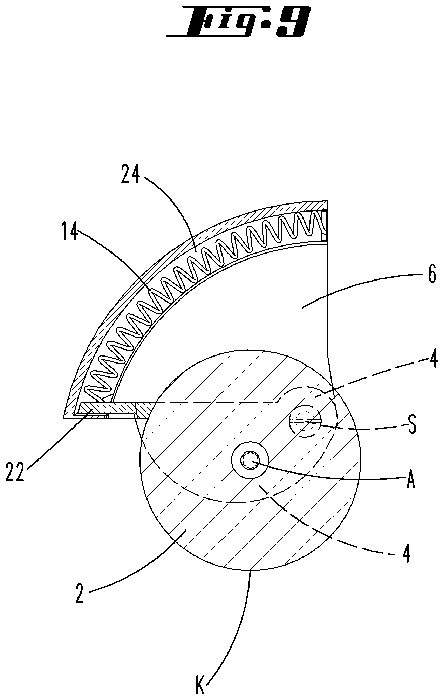

Bei einer Belastung oder einem Stoß auf das Rad 2 schwenkt die Gabel 4 dieser Rolle um die Schwenkachse S, wobei der Eingreiffortsatz 22 komprimierend auf das Dämpfungselement 15 einwirkt und durch dieses sodann nach Abklingen des Stoßes oder der Kraft wieder zurückgestellt wird in eine Stellung etwa gemäß Fig. 9, wobei unter Belastung, je nach Schwere des Teils, an dem die Rolle 1 befestigt ist, also bspw. je nach Schwere des Koffers, auch in dem durch Stöße oder sonstige Kraft nicht belasteten Zustand schon eine gewisse Einfederung gegeben sein kann.

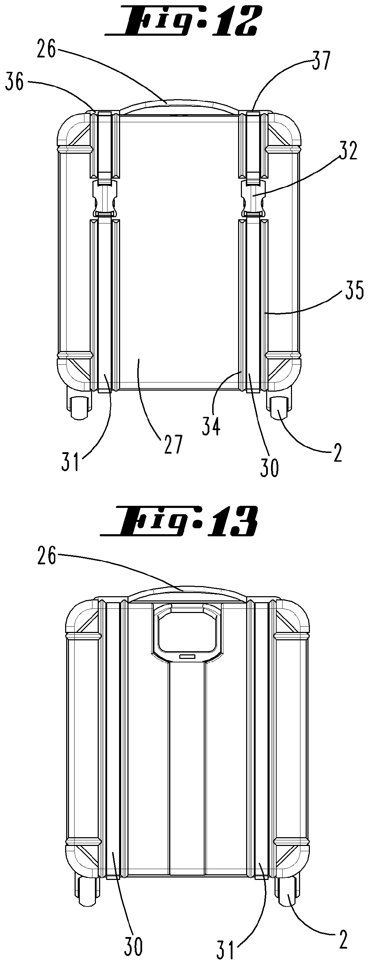

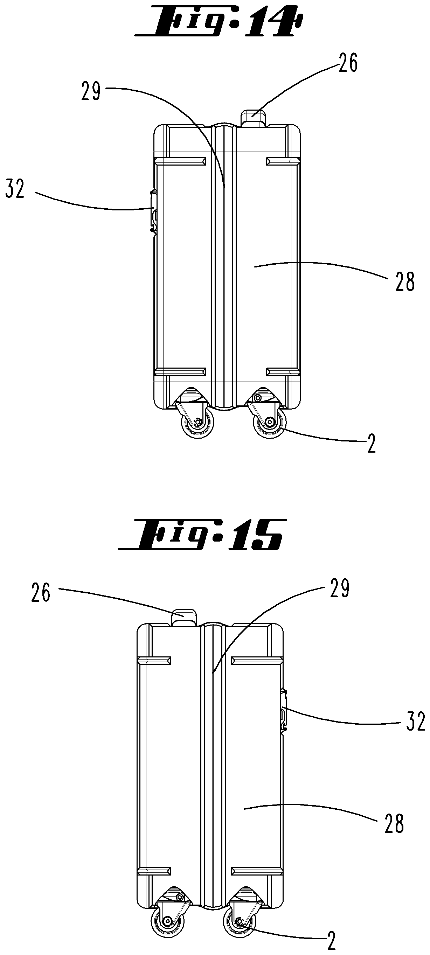

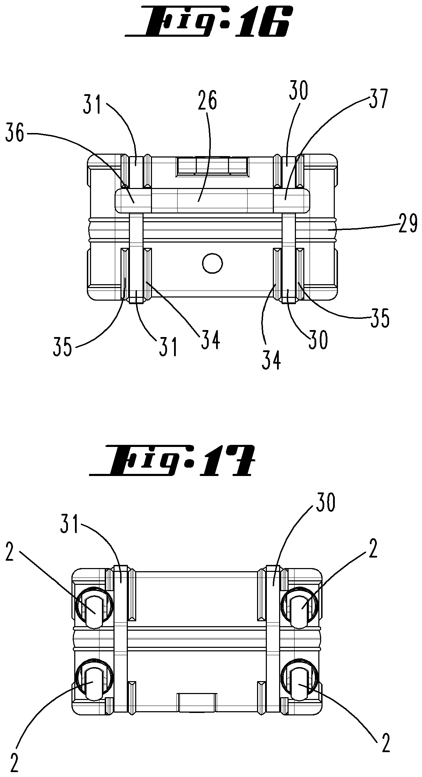

Mit Bezug zu den Figuren 11 bis 17 ist ein Koffer 7 erster Ausführung dargestellt.

Der Koffer 7 ist auf Rollen 2, die bei diesem Ausführungsbeispiel bevorzugt Rollen gemäß der Ausführungsform der Fig. 1 sind, verfahrbar. Er weist einen Griff 26 auf, der an einer Oberseite O des Koffers 7, bezogen auf eine übliche Handhabung, angebracht ist.

Der Koffer 7 ist beim Ausführungsbeispiel bevorzugt quaderförmig, mit einer weiter bevorzugt im Wesentlichen rechteckigen Gestaltung, wobei eine Schmalseite durch die Oberseite O bzw. die gegenüberliegende Unterseite U gegeben ist, gebildet.

Der Koffer 7 besteht weiter aus zwei Schalenteilen 27, 28, die zum Öffnen um eine Schwenkachse S₁ bewegbar sind. Die Schwenkachse S₁ ist bevorzugt und beim Ausführungsbeispiel zugeordnet der Unterseite U gegeben. Es muss sich nicht um eine reale Achse handeln. Die Schalenteile 27, 28 können bspw. durch einen Reißverschluss 29 miteinander verbunden sein, der prinzipiell auch umlaufend ausgebildet sein kann. Bevorzugt ist er im Bereich der Schwenkachse S1 nicht ausgebildet.

Die Schalenteile 27, 28 sind durch zwei Gurte 30, 31 umschlungen. Die Gurte 30, 31 verlaufen quer zu der Schwenkachse S1. Jeder Gurt 30, 31 weist zum Öffnen bzw. Schließen eine Schnalle 32 auf. Die Schnallen 32 sind bevorzugt und beim Ausführungsbeispiel zugeordnet einem Boden 33 eines Schalenteils, bei üblicher Benutzung wie in Fig. 11 dargestellt im oberen Bereich des Bodens 33, angeordnet. "Boden" bezieht sich hierbei darauf, dass diese Fläche bei geöffneten Schalenteilen 27, 28 den Boden der so offen stehenden Schale bildet.

Die Gurte 30, 31 sind über einen Teil ihres Umfangs, bevorzugt zugeordnet einem Bereich ausgehend von der Unterseite U und über einen Teil des Bodens des Schalenteils 27 mit diesem Schalenteil befestigt. Die Befestigung ist derart, dass sie von einem Benutzer nicht lösbar ist, sondern nur durch Zerstörung lösbar ist, bspw. Vernietung und/oder Verklebung.

Ein Gurt 30, 31 ist weiter in Seitenführungen 34, 35 aufgenommen. Die Seitenführungen 34, 35 sind beim Ausführungsbeispiel aus dem Schalenteil selbst durch Verformen herausgebildet.

Die Gurte 30, 31 können auch Griffhalterungen 36, 37 des Griffes durchsetzen. Die Griffhalterungen 36, 37 können auch lediglich überbrückend zu den Gurten an dem entsprechenden Schalenteil des Koffers angebracht sein.

Der Koffer 7 des Ausführungsbeispiels gemäß Figuren 11 bis 17 weist ersichtlich vier Rollen 2 auf, je zwei Rollen befestigt an einem Schalenteil.

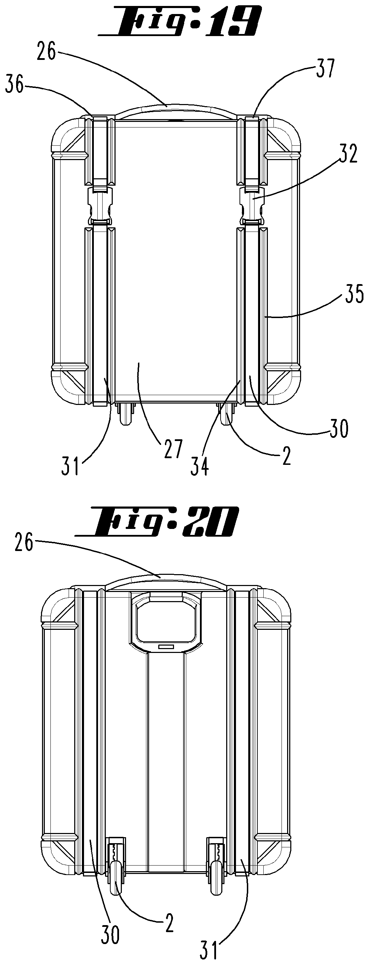

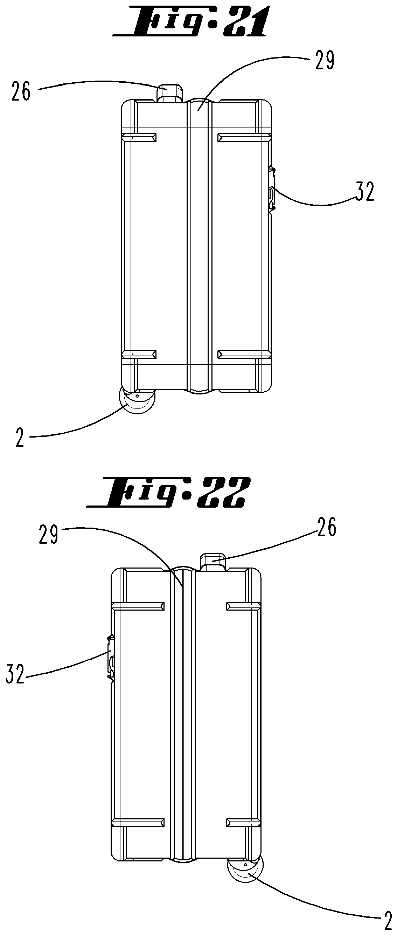

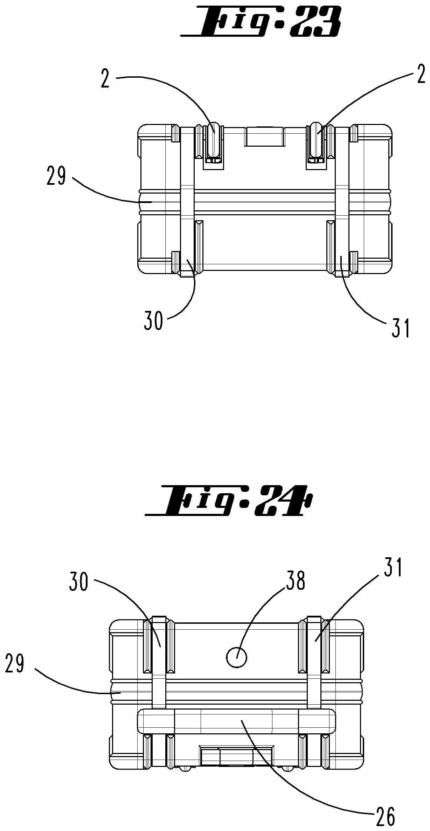

Bei der Ausführungsform eines Koffers gemäß Figuren 18 bis 24 bezeichnen gleiche Bezugszeichen gleiche Teile.

Bei diesem Koffer sind, bevorzugt auch zwei, Rollen 2 gemäß der Ausführungsform der Fig. 6 angebracht. Hierbei handelt es sich um Bockrollen. Die Räder 2 können nicht um eine Vertikalachse verschwenken, wie die Räder der Rolle 2 gemäß der Ausführungsform der Fig. 1.

An einer bei üblichem Gebrauch gegebenen Oberseite des Koffers ist, wie bspw. in den Figuren 11,16,18 und 24 ersichtlich, ein Kompass 38 angeordnet. Der Benutzer hat so eine Möglichkeit der Feststellung der Himmelsrichtung bei entsprechender Benutzung des Koffers.

Die Rollen 2 bei der Ausführungsform des Koffers gemäß den Figuren 18 bis 24 sind nur einem der Schalenteile 27, 28 zugeordnet angebracht.

Im Übrigen entspricht der Koffer der zweiten Ausführungsform dem Koffer der ersten Ausführungsform.

**Bezugszeichenliste**

| | | | |
|---|---|---|---|
| 1 | Rolle | 26 | Griff |
| 2 | Rad | 27 | Schalenteil |
| 3 | Gabel | 28 | Schalenteil |
| 4 | Gabelschenkel | 29 | Reißverschluss |
| 5 | Gabelsteg | 30 | Gurt |
| 6 | Halteplatte | 31 | Gurt |
| 7 | Koffer | 32 | Schnalle |
| 8 | Drehlager | 33 | Boden |
| 9 | Drehlagerplatte | 34 | Seitenführung |
| 10 | Drehlagerplatte | 35 | Seitenführung |
| 11 | Wälzkörper | 36 | Griffhalterung |
| 12 | Achsenteil | 37 | Griffhalterung |
| 13 | Lagerauge | 38 | Kompass |
| 14 | Dämpfungselement | 39 | Schenkelteil, Schalenteil |
| 15 | Dämpfungselement | 40 | Schenkelteil, Schalenteil |
| 16 | Befestigungsöffnung | 41 | Abschlusssteg |
| 17 | Befestigungsausnehmung | 42 | Abschlussgegensteg |
| 18 | Laufbahn | 43 | Untersteg |
| 19 | Laufbahn | 44 | Untersteg |
| 20 | Schraube | 45 | Luftreifen |
| 21 | Befestigungsmutter | 46 | Felge |
| 22 | Eingreiffortsatz | 47 | Luftkammer |
| 23 | Befestigungsöffnung/Befestigungselement | | |
| 24 | Raum | | |
| 25 | Durchgriffsspalt | | |
| A | Horizontalachse | R | Radius |
| a | Versetztmaß | S | Schwenkachse |
| K | Radkontur | S₁ | Schwenkachse |
| L | Längsachse | U | Unterseite |
| O | Oberseite | V | Vertikalachse |

## Patentansprüche

1. Auf Rollen verfahrbarer Koffer (7) mit einem Griff (26) und eigenstabilen Schalenteilen (27, 28), die um eine gemeinsame Schwenkachse zum Öffnen und Schließen des Koffers (7) bewegbar sind, wobei die Schalenteile (27, 28) durch mindestens einen quer zu der Schwenkachse verlaufenden, eine Schnalle aufweisenden Gurt (30, 31), der außen auf den Schalenteilen (27, 28) aufliegt, umschlungen sind, wobei zwei, im Wesentlichen parallel und beabstandet zueinander verlaufende, die Schalenteile (27, 28) umschlingende Gurte (30, 31) vorgesehen sind, die zumindest teilweise in kofferfesten Seitenführungen (34, 35) einliegen, und wobei die Gurte (30, 31) auf einem Teil ihrer Länge in nur durch Zerstörung aufhebbarer Weise mit den Schalenteilen (27, 28) verbunden sind, **dadurch gekennzeichnet, dass** eine Seitenführung (34, 35) durch eine Formgebung des Schalenteils (27, 28) erreicht ist.

2. Koffer nach Anspruch 1, **dadurch gekennzeichnet, dass** der Koffer (7) einen einem Boden eines Schalenteils (27, 28) zugeordneten Ausziehgriff aufweist und dass die Gurte (30, 31) bezogen auf eine Ausziehrichtung des Ausziehgriffes beidseitig des Ausziehgriffes angeordnet sind.

3. Koffer nach einem der vorhergehenden Ansprüche, **dadurch gekennzeichnet, dass** eine Schnalle (32) einem Boden eines Schalenteils (27, 28) zugeordnet vorgesehen ist.

4. Koffer nach einem der vorhergehenden Ansprüche, **dadurch gekennzeichnet, dass** der Griff (26) an seinen Endbereichen Griffhalterungen (36, 37) aufweist und dass eine Griffhalterung (36, 37) von einem Gurt (30, 31) durchsetzt ist.

5. Koffer (7) nach einem der Ansprüche 1 bis 4, mit einer Kofferrolle, **dadurch gekennzeichnet, dass** die Rolle (1) ein Rad (2), eine Gabel (3), mit einem oder zwei Gabelschenkeln (4) und einem Gabelsteg (5), in welcher Gabel (3) das Rad (2) um eine bei üblicher Nutzung gegebene Horizontalachse (A) drehbar aufgenommen ist, eine Halteplatte (6) und bevorzugt ein Drehlager (8) aufweist, mit welchem Drehlager (8) die Gabel (3) um eine bei üblicher Nutzung gegebene Vertikalachse (V) drehbar vorgesehen sein kann, wobei weiter die Gabel (3), gegebenenfalls relativ zu dem Drehlager (8), um eine bei üblicher Nutzung horizontal verlaufende Schwenkachse (S) gegen einen Dämpfungswiderstand verschwenkbar ist.

6. Koffer nach Anspruch 5, **dadurch gekennzeichnet, dass** die Schwenkachse (S) an dem bei üblicher Nutzung horizontal ausgerichteten und vertikal oberhalb des Rades (2) verlaufenden Gabelsteg (5) ausgebildet ist.

7. Koffer nach einem der Ansprüche 1 bis 4, mit einer Kofferrolle, **dadurch gekennzeichnet, dass** die Rolle (1) ein Rad (2), eine Gabel (3), in der das Rad (2) um eine bei üblicher Nutzung gegebene Horizontalachse (A) drehbar aufgenommen ist, und eine Halteplatte (6) aufweist, wobei weiter die Gabel (3) relativ zu der Halteplatte (6) um eine bei üblicher Nutzung horizontal verlaufende Schwenkachse (S) gegen einen Widerstand eines Dämpfungselementes (14) verschwenkbar ist und das Rad (2) eine in einer Richtung der Schwenkachse (S) gesehen gegebene Radkontur (K) aufweist, und dass die Gabel (3) mit einem gesehen von der Schwenkachse (S) über die Radkontur (K) vorspringenden und ebenfalls um die Schwenkachse (S) verschwenkenden Eingreiffortsatz (22) mit dem Dämpfungselement (14) zusammenwirkt.

8. Koffer nach einem der Ansprüche 5 oder 6, **dadurch gekennzeichnet, dass** beidseitig der Schwenkachse (S) ein Dämpfungselement (14, 15) angeordnet ist.

9. Koffer nach Anspruch 7, **dadurch gekennzeichnet, dass** das Dämpfungselement (14, 15) säulenartig und in Richtung einer Säulenlängsachse komprimierbar gebildet ist.

10. Koffer nach einem der Ansprüche 5 ,6 oder 8, **dadurch gekennzeichnet, dass** das Drehlager (8) eine untere und eine obere Drehlagerplatte (9, 10) aufweist und dass ein Dämpfungselement (14) an der unteren Drehlagerplatte (10) und an der Gabel (3) abgestützt ist.

11. Koffer nach einem der Ansprüche 7 oder 9, **dadurch gekennzeichnet, dass** das Dämpfungselement (14) in einer an einen Kreisbogen um die Schwenkachse (S) angepassten Führung in der Halteplatte (6) aufgenommen ist.

12. Koffer nach einem der Ansprüche 7, 9 oder 11, **dadurch gekennzeichnet, dass** die Halteplatte (6) gabelartig gebildet ist.

13. Koffer nach einem der vorhergehenden Ansprüche, **dadurch gekennzeichnet, dass** der Koffer (7) mit einem Kompass (38) versehen ist.

14. Koffer nach Anspruch 13, **dadurch gekennzeichnet, dass** der Kompass (38) auf einer bei üblichem Gebrauch oberen Seite des Koffers (7) angeordnet ist.

## Claims

1. Suitcase (7) which is movable on rollers, comprising a handle (26) and inherently stable shell parts (27, 28) which are movable about a common pivot axis in order to open and close the suitcase (7), the shell parts (27, 28) being encircled by at least one strap (30, 31) which extends transversely to the pivot axis, has a buckle, and rests on the outside of the shell parts (27, 28), two straps (30, 31) being provided which extend substantially parallel and spaced apart from one another, encircle the shell parts (27, 28), and at least partially lie in lateral guides (34, 35) which are fixed to the suitcase, and the straps (30, 31) being connected on part of the length thereof to the shell parts (27, 28) such that said straps can only be removed by destruction, **characterised in that** a lateral guide (34, 35) is achieved by shaping the shell part (27, 28).

2. Suitcase according to claim 1, **characterised in that** the suitcase (7) has a pull-out handle which is associated with a base of a shell part (27, 28), and **in that** the straps (30, 31) are arranged on both sides of the pull-out handle with respect to a pull-out direction of the pull-out handle.

3. Suitcase according to either of the preceding claims, **characterised in that** a buckle (32) is provided so as to be associated with a base of a shell part (27, 28).

4. Suitcase according to any of the preceding claims, **characterised in that** the handle (26) has handle mounts (36, 37) at the end regions thereof, and **in that** a strap (30, 31) passes through a handle mount (36, 37).

5. Suitcase (7) according to any of claims 1 to 4 comprising a suitcase roller, **characterised in that** the roller (1) comprises a wheel (2), a fork (3) having one or two fork prongs (4) and a fork bridge (5), in which fork (3) the wheel (2) is rotatably received about an axis (A) which is horizontal during normal use, and comprises a mounting plate (6) and preferably a pivot bearing (8), by means of which pivot bearing (8) the fork (3) can be provided so as to be rotatable about an axis (V) which is vertical during normal use, the fork (3) also being pivotable, optionally relative to the pivot bearing (8), against a damping resistance about a pivot axis (S) which extends horizontally during normal use.

6. Suitcase according to claim 5, **characterised in that** the pivot axis (S) is formed on the fork bridge (5) which is horizontally oriented during normal use and extends vertically above the wheel (2).

7. Suitcase according to any of claims 1 to 4 comprising a suitcase roller, **characterised in that** the roller (1) has a wheel (2), a fork (3) in which the wheel (2) is rotatably received about an axis (A) which is horizontal during normal use, and a mounting plate (6), the fork (3) also being pivotable relative to the mounting plate (6) against a resistance of a damping element (14) about a pivot axis (S) which extends horizontally during normal use, and the wheel (2) having a wheel contour (K) which is seen in one direction of the pivot axis (S), and **in that** the fork (3) interacts with the damping element (14) by means of an engagement projection (22) which, seen from the pivot axis (S), projects beyond the wheel contour (K) and likewise pivots about the pivot axis (S).

8. Suitcase according to either claim 5 or claim 6, **characterised in that** a damping element (14, 15) is arranged on both sides of the pivot axis (S).

9. Suitcase according to claim 7, **characterised in that** the damping element (14, 15) is formed in a column-like manner and can be compressed in the direction of a longitudinal axis of the column.

10. Suitcase according to either claims 5, 6 or 8, **characterised in that** the pivot bearing (8) has a lower and an upper pivot bearing plate (9, 10), and **in that** a damping element (14) is supported on the lower pivot bearing plate (10) and on the fork (3).

11. Suitcase according to either claim 7 or claim 9, **characterised in that** the damping element (14) is received in a guide in the holding plate (6), which guide is adapted to a circular arc about the pivot axis (S).

12. Suitcase according to any of claims 7, 9 or 11, **characterised in that** the mounting plate (6) is formed in a fork-like manner.

13. Suitcase according to any of the preceding claims, **characterised in that** the suitcase (7) is provided with a compass (38).

14. Suitcase according to claim 13, **characterised in that** the compass (38) is arranged on a face of the suitcase (7) that is the upper face during normal use.

## Revendications

1. Valise (7) déplaçable sur roulettes, comprenant une poignée (26) et des parties de coque (27, 28) intrinsèquement stables qui sont déplaçables autour d'un axe de pivotement commun pour ouvrir et fermer la valise (7), dans laquelle les parties de coque (27, 28) sont entourées par au moins une sangle (30, 31) présentant une boucle et qui s'étend transversalement à l'axe de pivotement et repose à l'extérieur sur les parties de coque (27, 28), dans laquelle sont prévues deux sangles (30, 31) sensiblement parallèles et écartées l'une de l'autre qui entourent les parties de coque (27, 28) et qui reposent au moins partiellement dans des guides latéraux (34, 35) solidaires de la valise, et dans laquelle les sangles (30, 31) sont reliées sur une partie de leur longueur aux parties de coque (27, 28) de manière à ne pouvoir en être désolidarisées que par destruction, **caractérisée en ce qu'**un guide latéral (34, 35) est procuré par un façonnement de la partie de coque (27, 28).

2. Valise selon la revendication 1, **caractérisée en ce que** la valise (7) comprend une poignée coulissante associée à un fond d'une partie de coque (27, 28) et **en ce que** les sangles (30, 31) sont agencées des deux côtés de la poignée coulissante par rapport à une direction d'extraction de la poignée coulissante.

3. Valise selon l'une des revendications précédentes, **caractérisée en ce qu'**est prévue une boucle (32) associée à un fond d'une partie de coque (27, 28).

4. Valise selon l'une des revendications précédentes, **caractérisée en ce que** la poignée (26) présente des fixations de poignée (36, 37) à ses extrémités et **en ce qu'**une sangle (30, 31) traverse une fixation de poignée (36, 37).

5. Valise (7) selon l'une des revendications 1 à 4, avec une roulette de valise, **caractérisée en ce que** la roulette (1) présente une roue (2), une fourche (3) ayant une ou deux branches de fourche (4) et une âme de fourche (5) dans laquelle fourche (3) est montée à rotation la roue (2) autour d'un axe horizontal (A) donné en utilisation normale, une plaque de montage (6) et de préférence un palier rotatif (8), avec lequel palier rotatif (8) la fourche (3) peut être prévue pivotante autour d'un axe vertical (V) donné en utilisation normale, dans laquelle la fourche (3) peut également pivoter, le cas échéant par rapport au palier rotatif (8), autour d'un axe de pivotement (S) s'étendant horizontalement en utilisation normale, à l'encontre d'une résistance d'amortissement.

6. Valise selon la revendication 5, **caractérisée en ce que** l'axe de pivotement (S) est formé sur l'âme de fourche (5) qui, en utilisation normale, est orientée horizontalement et s'étend verticalement au-dessus de la roue (2).

7. Valise selon l'une des revendications 1 à 4, avec une roulette de valise, **caractérisée en ce que** la roulette (1) comprend une roue (2), une fourche (3) dans laquelle la roue (2) est montée à rotation autour d'un axe horizontal (A) donné en utilisation normale, et une plaque de montage (6), dans laquelle, en outre, la fourche (3) peut pivoter par rapport à la plaque de montage (6) autour d'un axe de pivotement (S) s'étendant horizontalement en utilisation normale à l'encontre d'une résistance d'un élément amortisseur (14) et la roue (2), vue dans une direction de l'axe de pivotement (S), a un contour de roue (K) donné, et **en ce que** la fourche (3) interagit avec l'élément amortisseur (14) avec une extension d'engagement (22) qui, vue depuis l'axe de pivotement (S), fait saillie au-delà du contour de roue (K) et pivote également autour de l'axe de pivotement (S).

8. Valise selon l'une des revendications 5 ou 6, **caractérisée en ce qu'**un élément amortisseur (14, 15) est agencé des deux côtés de l'axe de pivotement (S).

9. Valise selon la revendication 7, **caractérisé en ce que** l'élément amortisseur (14, 15) est réalisé sous la forme d'une colonne et est compressible dans la direction d'un axe longitudinal de la colonne.

10. Valise selon l'une des revendications 5, 6 ou 8, **caractérisée en ce que** le palier rotatif (8) présente une plaque inférieure et une plaque supérieure de palier rotatif (9, 10) et **en ce qu'**un élément amortisseur (14) est supporté par la plaque inférieure de palier rotatif (10) et par la fourche (3).

11. Valise selon l'une des revendications 7 ou 9, **caractérisée en ce que** l'élément amortisseur (14) est logé dans la plaque de montage (6) dans un guide formé en arc de cercle autour de l'axe de pivotement (S).

12. Valise selon l'une des revendications 7, 9 ou 11, **caractérisée en ce que** la plaque de montage (6) est formée à la manière d'une fourche.

13. Valise selon l'une des revendications précédentes, **caractérisée en ce que** la valise (7) est munie d'une boussole (38).

14. Valise selon la revendication 13, **caractérisée en ce que** la boussole (38) est agencée sur un côté supérieur de la valise (7) en utilisation normale.
